# FASCICULE DE BREVET EUROPEEN

(11) **EP 3 675 695 B1**
(45) Date de publication et mention de la délivrance du brevet: **17.01.2024**
(21) Numéro de dépôt: 18766317.4
(22) Date de dépôt: 17.08.2018
(51) Int. Cl.: A47J 36/02

(54) **SUPPORT DE CUISSON MULTICOUCHES POUVANT ÊTRE CHAUFFÉ PAR INDUCTION**
DURCH INDUKTION ERHITZBARES MEHRSCHICHTIGES KOCHGEFÄSS
MULTILAYER COOKING VESSEL THAT CAN BE HEATED BY INDUCTION

(30) Priorité: 24.08.2017 FR 1757842
(43) Date de publication de la demande: 08.07.2020
(73) Titulaire: SEB S.A., 69130 Ecully (FR)
(72) Inventeur: LINGLIN, Benoît, 74370 Saint Martin Bellevue (FR)
(74) Mandataire: SEB Développement
(86) Numéro de dépôt international: PCT/FR2018/052074
(87) Numéro de publication internationale: WO 2019/038498

(56) Documents cités:
- WO-A1-99/56950
- WO-A1-2013/093297
- GB-A- 1 046 798
- GB-A- 1 329 979
- US-A1- 2007 292 706

## Description

La présente invention concerne le domaine technique des supports de cuisson prévus pour être chauffés par induction, pour cuire ou réchauffer des aliments.

La présente invention concerne plus particulièrement les supports de cuisson multicouches prévus pour être chauffés par induction.

La présente invention concerne notamment, mais non exclusivement, les supports de cuisson formant un récipient de cuisson.

La présente invention concerne également les articles culinaires comprenant un support de cuisson associé à au moins un organe de préhension. Si désiré le ou les organes de préhension peuvent être amovibles ou démontables par rapport au support de cuisson.

La présente invention concerne également les appareils électriques de cuisson comportant un support de cuisson associé à un dispositif de chauffage par induction.

Il est connu de rapporter une grille en acier inoxydable ferritique sous le fond d'une plaque métallique pour former un récipient de cuisson pouvant être chauffé par induction. La plaque métallique est par exemple réalisée en aluminium. Une telle réalisation utilise une opération de frappe à froid pour assembler la grille avec la plaque métallique, avant de mettre en forme l'ensemble par emboutissage.

Il est également connu d'assembler une plaque en acier inoxydable ferritique avec une cuve en utilisant une plaque intermédiaire en aluminium pour former un récipient de cuisson comportant un fond diffuseur.

Il est également connu d'utiliser un matériau colaminé bi-couche ou tri-couche comportant une couche d'aluminium colaminée avec une ou deux couches d'acier inoxydable, pour réaliser un récipient de cuisson multicouches. Le document US 2007 292706 décrit un support de cuisson adapté aux plaques à induction comprenant plusieurs couches métalliques : deux couches extérieures métalliques et au moins une couche centrale disposée entre ces couches extérieures, au moins une des deux couches extérieures étant constituée d'aluminium ou d'un alliage d'aluminium et la couche centrale adjacente à cette couche extérieure étant constituée d'un métal ferromagnétique ou d'un alliage métallique ferromagnétique. Un revêtement peut être appliqué de manière simple et économique sur la couche extérieure en aluminium ou en alliage d'aluminium de ce matériau composite, ce qui permet de produire à moindre coût des ustensiles de cuisson pour plaques à induction de haute qualité avec un revêtement voulu.

Un inconvénient de ces réalisations est qu'elles restent relativement onéreuses.

Un objet de la présente invention est de proposer un support de cuisson multicouches compatible avec un dispositif de chauffage par induction, dont la réalisation soit davantage économique.

Un autre objet de la présente invention est de proposer un procédé d'obtention d'un support de cuisson multicouches compatible avec un dispositif de chauffage par induction, qui soit davantage économique.

Ces objets sont atteints avec un support de cuisson selon la revendication 1.

L'utilisation d'une couche de matériau ferromagnétique autre que de l'acier inoxydable permet de réduire notablement le coût du support de cuisson. L'utilisation d'une structure colaminée comportant une couche métallique de protection permet de protéger la surface de la couche de matériau ferromagnétique notamment de la corrosion, mais aussi de conserver le couplage électromagnétique entre le matériau ferromagnétique et un foyer de chauffe par induction.

Avantageusement alors, la couche de matériau ferromagnétique est réalisée dans une nuance d'acier au carbone adaptée à un formage par emboutissage à température ambiante. Cette disposition permet d'obtenir une construction économique.

Avantageusement alors, la couche de matériau ferromagnétique est réalisée dans une nuance d'acier comportant de 0,12 à 0,08 % en masse de carbone et de 0,6 à 0,35 % en masse de manganèse.

Avantageusement encore, l'épaisseur de la couche de diffusion thermique est supérieure à l'épaisseur de la couche de matériau ferromagnétique. Cette disposition permet d'améliorer l'homogénéité thermique de la face supérieure de cuisson.

Avantageusement encore, la couche de diffusion thermique est réalisée en aluminium ou en alliage d'aluminium. Cette disposition permet d'obtenir une construction économique. protection.

Selon l'invention, la couche métallique de protection est formée par un revêtement de nickel électrolytique.

Avantageusement alors, la couche métallique de protection présente une épaisseur comprise entre 2 et 30 µm, et de préférence entre 4 et 15 µm. Du fait du caractère ferromagnétique du nickel, l'épaisseur de la couche métallique de protection peut être plus épaisse avec un revêtement de nickel électrolytique qu'avec un feuillard d'aluminium.

Avantageusement encore, une autre couche métallique de protection recouvre la couche de matériau ferromagnétique du côté de la couche de diffusion thermique. Cette disposition permet de faciliter la réalisation de la couche métallique de protection par immersion de la couche de matériau ferromagnétique dans un bain électrolytique sans nécessiter de protéger l'autre face de la couche de matériau ferromagnétique.

Avantageusement alors, l'autre couche métallique de protection est formée par un autre revêtement de nickel électrolytique. La couche métallique de protection et l'autre couche métallique de protection peuvent ainsi être obtenues avec la même opération.

Avantageusement encore, l'autre couche métallique de protection présente une épaisseur comprise entre 2 et 30 µm, et de préférence entre 4 et 15 µm.

Avantageusement encore, la couche de diffusion thermique présente une épaisseur comprise entre 0,5 et 6 mm, et de préférence entre 1 et 1,5 mm.

Avantageusement encore, la couche de matériau ferromagnétique présente une épaisseur comprise entre 0,15 et 1 mm, et de préférence entre 0,25 et 0,6 mm.

Avantageusement encore, la couche de diffusion thermique porte un revêtement formant la face supérieure de cuisson, notamment un revêtement PTFE, ou un revêtement céramique, ou un revêtement émail.

Selon une forme de réalisation, le support de cuisson comporte un fond entouré par une paroi latérale pour former un récipient de cuisson.

Ces objets sont atteints également avec un article culinaire comportant un support de cuisson présentant un organe de préhension, dans lequel le support de cuisson est conforme à l'une au moins des caractéristiques précitées.

Ces objets sont atteints également avec un appareil électrique de cuisson comportant un support de cuisson associé à un foyer de chauffe par induction, dans lequel le support de cuisson est conforme à l'une au moins des caractéristiques précitées.

Ces objets sont atteints également avec un procédé d'obtention d'un support de cuisson selon l'une au moins des caractéristiques précitées, comportant les étapes suivantes :
- découpe ou fourniture d'une forme issue d'un feuillard colaminé comprenant la couche de diffusion thermique, la couche de matériau ferromagnétique et la couche métallique de protection,
- emboutissage de la forme pour former un support de cuisson comportant la face supérieure de cuisson du côté de la couche de diffusion thermique et la face inférieure de chauffe du côté de la couche métallique de protection.

Avantageusement alors, la forme est un disque.

L'invention sera mieux comprise à l'étude de quatre exemples de réalisation, pris à titre nullement limitatif, illustrés dans les figures annexées, dans lesquelles :
- la figure 1 est une vue en élévation et en coupe verticale d'un premier exemple de réalisation d'un support de cuisson multicouches selon l'invention, les épaisseurs des différentes couches n'étant pas représentées à l'échelle,
- la figure 2 est une vue agrandie d'une partie de la figure 1,
- la figure 3 est une vue schématique en élévation et en coupe verticale d'une partie d'un deuxième exemple de réalisation d'un support de cuisson multicouches selon l'invention, les épaisseurs des différentes couches n'étant pas non plus représentées à l'échelle,
- la figure 4 est une vue schématique en élévation et en coupe verticale d'un exemple de réalisation d'un article culinaire comportant un support de cuisson multicouches selon l'invention,
- la figure 5 est une vue schématique en élévation et en coupe verticale d'un exemple de réalisation d'un appareil électrique de cuisson comportant un support de cuisson multicouches selon l'invention.

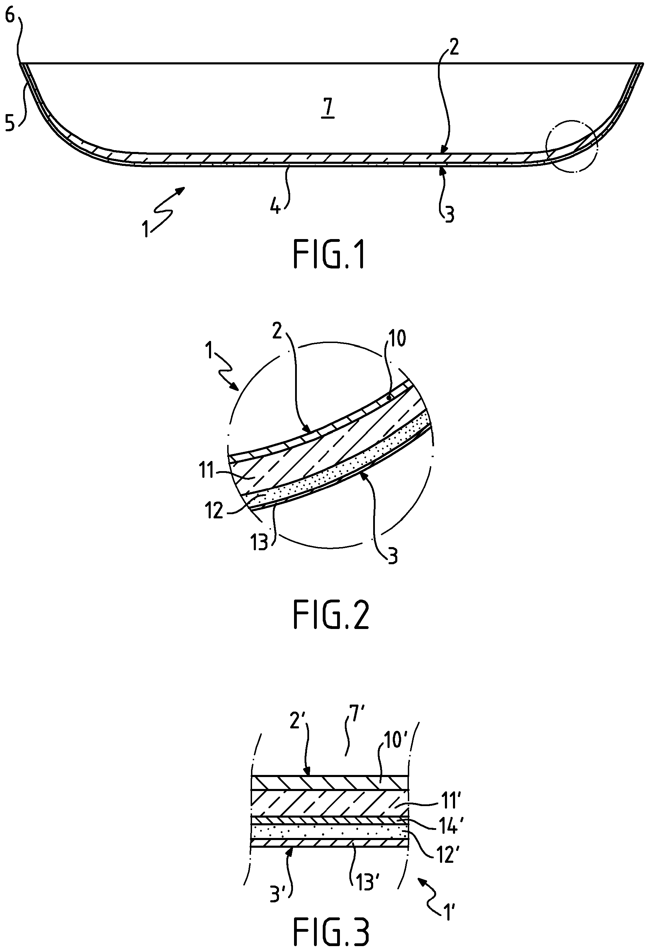

Le support de cuisson 1 illustré sur la figure 1 présente une face supérieure de cuisson 2 prévue pour recevoir les aliments à cuire et une face inférieure de chauffe 3 prévue pour être chauffée, notamment en reposant sur un foyer de chauffe par induction.

Dans l'exemple de réalisation illustré sur la figure 1, le support de cuisson 1 comporte un fond 4 entouré par une paroi latérale 5 pour former un récipient de cuisson 7. La paroi latérale 5 s'élève jusqu'à un bord supérieur 6.

Le support de cuisson 1 est un support de cuisson multicouches compatible avec un chauffage par induction. Le support de cuisson 1 comporte une structure colaminée multicouches.

Le support de cuisson 1 comporte une couche de diffusion thermique 11 formant ou portant la face supérieure de cuisson 2. Le support de cuisson 1 comporte une couche de matériau ferromagnétique 12 colaminée avec la couche de diffusion thermique 11.

La couche de diffusion thermique 11 est de préférence réalisée en aluminium ou en alliage d'aluminium. A titre de variante, d'autres matériaux bons conducteurs de chaleur pourraient être envisagés, tel que notamment le cuivre. Toutefois un tel matériau s'avère assez onéreux.

La couche de diffusion thermique 11 peut notamment porter un revêtement supérieur 10 formant la face supérieure de cuisson 2. Le revêtement supérieur 10 peut notamment être un revêtement PTFE, ou un revêtement céramique, ou un revêtement émail. Si désiré, le revêtement supérieur 10 peut présenter plusieurs couches. En alternative, la couche de diffusion thermique 11 peut former la face supérieure de cuisson 2. Si désiré la couche de diffusion thermique 11 peut présenter un traitement de surface, tel que par exemple une anodisation.

La couche de matériau ferromagnétique 12 est réalisée en acier non inoxydable, un tel matériau étant plus économique que l'acier inoxydable. La couche de matériau ferromagnétique 12 en acier non inoxydable est avantageusement réalisée en acier au carbone. La couche de matériau ferromagnétique 12 en acier non inoxydable est de préférence réalisée dans une nuance d'acier au carbone adaptée à un formage par emboutissage à température ambiante. Les nuances d'acier dénommées DD11, DD12, DD13 ou DD14, comportant de 0,12 à 0,08 % en masse de carbone et de 0,6 à 0,35 % en masse de manganèse, sont par exemple bien adaptées pour réaliser la couche de matériau ferromagnétique 12.

La couche de matériau ferromagnétique 12 est recouverte par une couche métallique de protection 13 formant ou portant la face inférieure de chauffe 3. La couche métallique de protection 13 doit permettre de protéger la face extérieure de la couche de matériau ferromagnétique 12 réalisée en acier non inoxydable. Le bord supérieur 6 du récipient de cuisson 7 pourra notamment être laissé libre de toute protection, tel que représenté sur la figure 1, ou bien être retourné pour cacher l'éventuelle apparition d'une corrosion.

Dans l'exemple de réalisation illustré sur les figures 1 et 2, le support de cuisson 1 comporte une structure colaminée à 3 couches comprenant la couche de diffusion thermique 11, la couche de matériau ferromagnétique 12, et la couche métallique de protection 13. La couche de diffusion thermique 11 peut présenter une épaisseur comprise entre 1 et 5 mm. La couche de matériau ferromagnétique 12 peut présenter une épaisseur de l'ordre de 0,25 mm. Ainsi l'épaisseur de la couche de diffusion thermique 11 est supérieure à l'épaisseur de la couche de matériau ferromagnétique 12.

Dans l'exemple de réalisation illustré sur les figures 1 et 2, la couche métallique de protection 13 est formée par un feuillard d'aluminium colaminé avec la couche de matériau ferromagnétique 12 et la couche de diffusion thermique 11. La couche métallique de protection 13 doit permettre un couplage inductif de la couche de matériau ferromagnétique 12 avec le foyer de chauffe par induction sur lequel est disposé le support de cuisson 1. A cet effet il a été observé que lorsque la couche métallique de protection 13 présente une épaisseur moyenne inférieure à 10 µm, le couplage du support de cuisson 1 avec le foyer de chauffe par induction est plutôt bon. De plus lorsque la couche métallique de protection 13 présente une épaisseur moyenne inférieure à 8 µm, aucun défaut de couplage entre le support de cuisson 1 et le foyer de chauffe par induction n'a été observé.

Ainsi l'épaisseur moyenne de la couche métallique de protection 13 est inférieure à l'épaisseur de la couche de matériau ferromagnétique 12 et à l'épaisseur de la couche de diffusion thermique 11. Si désiré, la couche métallique de protection 13 peut porter un revêtement, non représenté sur les figures, formant la face inférieure de chauffe 3.

L'exemple de réalisation illustré sur la figure 3 diffère de l'exemple de réalisation illustré sur les figures 1 et 2 en ce que le support de cuisson 1' comporte une structure colaminée à 2 couches comprenant une couche de diffusion thermique 11' et une couche de matériau ferromagnétique 12', la couche de matériau ferromagnétique 12' étant revêtue du côté de la face inférieure de chauffe 3' par une couche métallique de protection 13' formée par un revêtement de nickel électrolytique et du côté de la couche de diffusion thermique 11' par une autre couche métallique de protection 14' formée par un autre revêtement de nickel électrolytique. La couche de diffusion thermique 11' forme ou porte la face supérieure de cuisson 2'. Le support de cuisson 1' peut comporter un fond entouré par une paroi latérale pour former un récipient de cuisson 7'.

La couche de diffusion thermique 11' peut présenter une épaisseur comprise entre 1 et 5 mm, avantageusement de l'ordre de 1 mm. L'autre couche métallique de protection 14' peut présenter une épaisseur comprise entre 2 et 30 µm, et de préférence entre 4 et 15 µm, avantageusement de l'ordre de 5 µm. La couche de matériau ferromagnétique 12' peut présenter une épaisseur de l'ordre de 0,5 mm. La couche métallique de protection 13' peut présenter une épaisseur comprise entre 2 et 30 µm, et de préférence entre 4 et 15 µm, avantageusement de l'ordre de 5 µm.

Ainsi la structure colaminée multicouches du support de cuisson 1 ou du récipient de cuisson 7 comporte trois couches colaminées (couche de diffusion thermique 11, couche de matériau ferromagnétique 12, et couche métallique de protection 13), et la structure colaminée multicouches du support de cuisson 1' ou du récipient de cuisson 7' comporte deux couches colaminées (couche de diffusion thermique 11', et couche de matériau ferromagnétique 12' revêtue d'un côté par la couche métallique de protection 13' et de l'autre côté par l'autre couche métallique de protection 14'). Si désiré la couche de diffusion thermique 11 ; 11' peut porter un revêtement supérieur 10 ; 10' formant la face supérieure de cuisson 2 ; 2'.

L'invention concerne également un procédé d'obtention d'un support de cuisson 1 ; 1' comportant les étapes suivantes :
- Découpe ou fourniture d'une forme issue d'un feuillard colaminé comprenant la couche de diffusion thermique 11 ; 11', la couche de matériau ferromagnétique 12 ; 12' et la couche métallique de protection 13 ; 13', la forme étant avantageusement un disque,
- Emboutissage de la forme pour former le support de cuisson 1 ; 1' comportant la face supérieure de cuisson 2 ; 2' du côté de la couche de diffusion thermique 11 ; 11' et la face inférieure de chauffe 3 ; 3' du côté de la couche métallique de protection 13 ; 13'.

Si désiré le procédé d'obtention du support de cuisson 1 ; 1' peut comporter au moins une étape ultérieure consistant à réaliser un revêtement supérieur formant la face supérieure de cuisson 2 ; 2' et/ou à réaliser un revêtement inférieur formant la face inférieure de chauffe 3 ; 3'.

Le revêtement inférieur formant la face inférieure de chauffe 3 ; 3' peut être formé par tout type de revêtement passant à la flamme, notamment un revêtement de type PTFE, ou de type laque, ou de type résine siliconée.

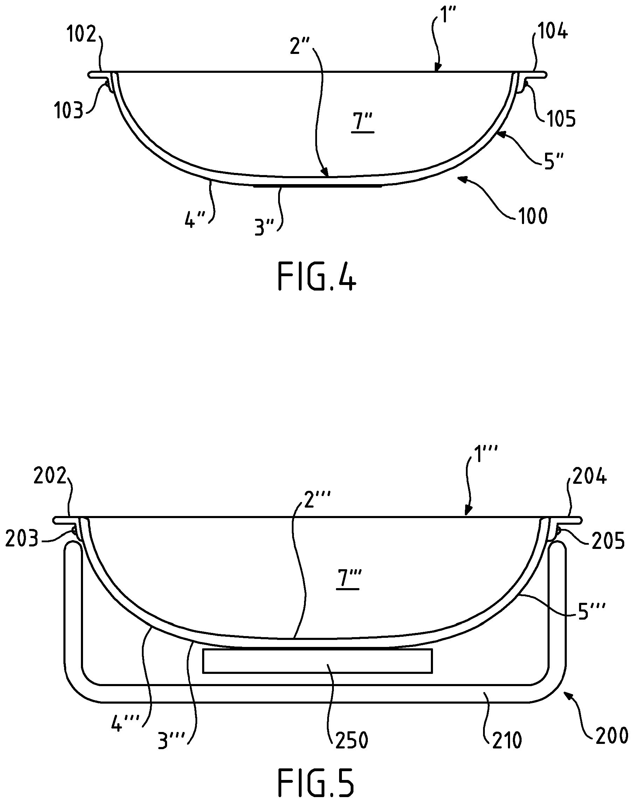

La figure 4 illustre un article culinaire 100 comportant un support de cuisson 1" présentant un organe de préhension 102. Le support de cuisson 1" correspond au support de cuisson 1 ou au support de cuisson 1'. Le support de cuisson 1" présente une face supérieure de cuisson 2" prévue pour contenir les aliments à cuire et une face inférieure de chauffe 3" prévue pour être chauffée, notamment en reposant sur un foyer de chauffe par induction. Le support de cuisson 1" comporte un fond 4" entouré par une paroi latérale 5" pour former un récipient de cuisson 7". Un organe de préhension 102 est fixé sur la paroi latérale 5" du récipient de cuisson 7".

Dans l'exemple de réalisation illustré sur la figure 4, l'organe de préhension 102 est fixé au récipient de cuisson 7" par au moins un rivet 103. A cet effet le rivet 103 est monté dans un trou ménagé dans la paroi latérale 5". Si désiré plusieurs rivets 103 peuvent être utilisés pour fixer l'organe de préhension 102 sur le récipient de cuisson 7". De préférence entre deux et quatre rivets 103 sont utilisés pour fixer l'organe de préhension 102 sur le récipient de cuisson 7". En alternative l'organe de préhension 102 pourrait être fixé sur la paroi latérale 5" par soudage ou par vissage sur un goujon soudé sur la paroi latérale 5". Si désiré un autre organe de préhension 104 peut être fixé sur la paroi latérale 5" du récipient de cuisson 7" au moyen d'au moins un autre rivet 105, par soudage ou par vissage sur un goujon soudé sur la paroi latérale 5".

La figure 5 illustre un appareil électrique de cuisson 200, comportant un support de cuisson 1‴ associé à un foyer de chauffe par induction 250. Le support de cuisson 1‴ correspond au support de cuisson 1 ou au support de cuisson 1'. Dans l'exemple de réalisation illustré sur la figure 5, le support de cuisson 1‴ comporte un fond 4'" entouré par une paroi latérale 5'" pour former un récipient de cuisson 7‴. Le récipient de cuisson 7‴ est agencé dans une base chauffante 210 comportant le foyer de chauffe par induction 250. Le récipient de cuisson 7‴ comporte une face inférieure de chauffe 3‴ reposant sur le foyer de chauffe par induction 250, et une face supérieure de cuisson 2‴. Si désiré le récipient de cuisson 7‴ peut comporter un organe de préhension 202 et/ou un autre organe de préhension 204, par exemple fixés par au moins un rivet 203 ou par au moins un autre rivet 205, ou par soudage ou par vissage sur un goujon soudé sur la paroi latérale 5‴.

A titre de variante, le support de cuisson 1 ; 1'; 1"; 1‴ ne forme pas nécessairement un récipient de cuisson 7 ; 7' ; 7" ; 7‴. Le support de cuisson 1 ; 1' ; 1" ; 1‴ peut notamment former une plaque de cuisson.

A titre de variante, la face inférieure de chauffe 3 ; 3' ; 3" ; 3‴ ne repose pas nécessairement entièrement sur un foyer de chauffe, notamment sur un foyer de chauffe par induction.

A titre de variante, la couche de diffusion thermique 11 ; 11' peut notamment présenter une épaisseur comprise entre 0,5 et 6 mm, et de préférence comprise entre 1 et 1,5 mm.

A titre de variante, la couche de matériau ferromagnétique 12 ; 12' peut notamment présenter une épaisseur comprise entre 0,15 et 1 mm, et de préférence entre 0,25 et 0,6 mm.

La présente invention n'est nullement limitée aux exemples de réalisation décrits, mais englobe de nombreuses modifications dans le cadre des revendications.

## Revendications

1. Support de cuisson (1') pouvant être chauffé par induction, présentant une face supérieure de cuisson (2') et une face inférieure de chauffe (3'), le support de cuisson (1') comportant une structure colaminée comprenant une couche de diffusion thermique (11'), si désirée revêtue, pour former la face supérieure de cuisson (2'), et une couche de matériau ferromagnétique (12'), **caractérisé en ce que** la couche de matériau ferromagnétique (12') est réalisée en acier non inoxydable, **en ce que** la structure colaminée comporte une couche métallique de protection (13') recouvrant la couche de matériau ferromagnétique (12') du côté opposé à la couche de diffusion thermique (11'), et **en ce que** la couche métallique de protection (13') est formée par un revêtement de nickel électrolytique.

2. Support de cuisson (1') selon la revendication 1, **caractérisé en ce que** la couche de matériau ferromagnétique (12') est réalisée dans une nuance d'acier au carbone adaptée à un formage par emboutissage à température ambiante.

3. Support de cuisson (1') selon la revendication 2, **caractérisé en ce que** la couche de matériau ferromagnétique (12') est réalisée dans une nuance d'acier comportant de 0,12 à 0,08 % en masse de carbone et de 0,6 à 0,35 % en masse de manganèse.

4. Support de cuisson (1') selon l'une des revendications 1 à 3, **caractérisé en ce que** l'épaisseur de la couche de diffusion thermique (11') est supérieure à l'épaisseur de la couche de matériau ferromagnétique (12').

5. Support de cuisson (1') selon l'une des revendications 1 à 4, **caractérisé en ce que** la couche de diffusion thermique (11') est réalisée en aluminium ou en alliage d'aluminium.

6. Support de cuisson (1') selon l'une des revendications 1 à 5, **caractérisé en ce que** la couche métallique de protection (13') présente une épaisseur comprise entre 2 et 30 µm, et de préférence entre 4 et 15 µm.

7. Support de cuisson (1') selon l'une des revendications 1 à 6, **caractérisé en ce qu'**une autre couche métallique de protection (14') recouvre la couche de matériau ferromagnétique (12') du côté de la couche de diffusion thermique (11'), l'autre couche métallique de protection (14') étant si désiré formée par un autre revêtement de nickel électrolytique.

8. Support de cuisson (1') selon la revendication 7, **caractérisé en ce que** l'autre couche métallique de protection (14') présente une épaisseur comprise entre 2 et 30 µm, et de préférence entre 4 et 15 µm.

9. Support de cuisson (1') selon l'une des revendications 1 à 8, **caractérisé en ce que** la couche de diffusion thermique (11') présente une épaisseur comprise entre 0,5 et 6 mm, et de préférence entre 1 et 1,5 mm.

10. Support de cuisson (1') selon l'une des revendications 1 à 9, **caractérisé en ce que** la couche de matériau ferromagnétique (12') présente une épaisseur comprise entre 0,15 et 1 mm, et de préférence entre 0,25 et 0,6 mm.

11. Support de cuisson (1') selon l'une des revendications 1 à 10, **caractérisé en ce que** la couche de diffusion thermique (11') porte un revêtement (10') formant la face supérieure de cuisson (2'), notamment un revêtement PTFE, ou un revêtement céramique, ou un revêtement émail.

12. Support de cuisson (1') selon l'une des revendications 1 à 11, **caractérisé en ce qu'**il comporte un fond (4) entouré par une paroi latérale (5) pour former un récipient de cuisson (7').

13. Article culinaire (100) comportant un support de cuisson (1") présentant un organe de préhension (102), **caractérisé en ce que** le support de cuisson (1") est conforme à l'une des revendications 1 à 12.

14. Appareil électrique de cuisson (200) comportant un support de cuisson (1‴) associé à un foyer de chauffe par induction (250), **caractérisé en ce que** le support de cuisson (1‴) est conforme à l'une des revendications 1 à 12.

15. Procédé d'obtention d'un support de cuisson (1') selon l'une des revendications 1 à 12, comportant les étapes suivantes :
- Découpe ou fourniture d'une forme issue d'un feuillard colaminé comprenant la couche de diffusion thermique (11'), la couche de matériau ferromagnétique (12') et la couche métallique de protection (13'), la forme étant si désiré un disque,
- Emboutissage de la forme pour former un support de cuisson (1') comportant la face supérieure de cuisson (2') du côté de la couche de diffusion thermique (11') et la face inférieure de chauffe (3') du côté de la couche métallique de protection (13').

## Patentansprüche

1. Kochträger (1'), der durch Induktion erhitzt werden kann, der eine obere Kochfläche (2') und eine untere Heizfläche (3') aufweist, wobei der Kochträger (1') eine kolaminierte Struktur umfasst, die eine Wärmediffusionsschicht (11') umfasst, die nach Wunsch beschichtet ist, um die obere Kochfläche (2') zu bilden, und eine Schicht aus ferromagnetischem Material (12'), **dadurch gekennzeichnet, dass** die Schicht aus ferromagnetischem Material (12') aus nicht rostfreiem Stahl hergestellt ist, dass die kolaminierte Struktur eine Metallschutzschicht (13') umfasst, die die Schicht aus ferromagnetischem Material (12') auf der der Wärmediffusionsschicht (11') entgegengesetzten Seite abdeckt, und dass die Metallschutzschicht (13') aus einer Beschichtung aus elektrolytischem Nickel gebildet ist.

2. Kochträger (1') nach Anspruch 1, **dadurch gekennzeichnet, dass** die Schicht aus ferromagnetischem Material (12') aus einer Kohlenstoffstahlsorte hergestellt ist, die an ein Tiefziehformen bei Umgebungstemperatur angepasst ist.

3. Kochträger (1') nach Anspruch 2, **dadurch gekennzeichnet, dass** die Schicht aus ferromagnetischem Material (12') aus einer Stahlsorte hergestellt ist, die 0,12 bis 0,08 Masse-% Kohlenstoff und 0,6 bis 0,35 Masse-% Mangan umfasst.

4. Kochträger (1') nach einem der Ansprüche 1 bis 3, **dadurch gekennzeichnet, dass** die Dicke der Wärmediffusionsschicht (11') größer als die Dicke der Schicht aus ferromagnetischem Material (12') ist.

5. Kochträger (1') nach einem der Ansprüche 1 bis 4, **dadurch gekennzeichnet, dass** die Wärmediffusionsschicht (11') aus Aluminium oder aus Aluminiumlegierung hergestellt ist.

6. Kochträger (1') nach einem der Ansprüche 1 bis 5, **dadurch gekennzeichnet, dass** die Metallschutzschicht (13') eine Dicke von 2 bis 30 µm und bevorzugt 4 bis 15 µm aufweist.

7. Kochträger (1') nach einem der Ansprüche 1 bis 6, **dadurch gekennzeichnet, dass** eine andere Metallschutzschicht (14') die Schicht aus ferromagnetischem Material (12') auf der Seite der Wärmediffusionsschicht (11') abdeckt, wobei die andere Metallschutzschicht (14') nach Wunsch aus einer anderen Beschichtung aus elektrolytischem Nickel gebildet ist.

8. Kochträger (1') nach Anspruch 7, **dadurch gekennzeichnet, dass** die andere Metallschutzschicht (14') eine Dicke von 2 bis 30 µm und bevorzugt 4 bis 15 µm aufweist.

9. Kochträger (1') nach einem der Ansprüche 1 bis 8, **dadurch gekennzeichnet, dass** die Wärmediffusionsschicht (11') eine Dicke von 0,5 bis 6 mm und bevorzugt 1 bis 1,5 mm aufweist.

10. Kochträger (1') nach einem der Ansprüche 1 bis 9, **dadurch gekennzeichnet, dass** die Schicht aus ferromagnetischem Material (12') eine Dicke von 0,15 bis 1 mm und bevorzugt 0,25 bis 0,6 mm aufweist.

11. Kochträger (1') nach einem der Ansprüche 1 bis 10, **dadurch gekennzeichnet, dass** die Wärmediffusionsschicht (11') eine Beschichtung (10') trägt, die die obere Kochfläche (2') bildet, insbesondere eine PTFE-Beschichtung oder eine Keramikbeschichtung oder eine Emailbeschichtung.

12. Kochträger (1') nach einem der Ansprüche 1 bis 11, **dadurch gekennzeichnet, dass** er einen Boden (4) umfasst, der von einer Seitenwand (5) umgeben ist, um einen Kochbehälter (7') zu bilden.

13. Küchenartikel (100), der einen Kochträger (1") aufweist, der ein Greiforgan (102) aufweist, **dadurch gekennzeichnet, dass** der Kochträger (1") einem der Ansprüche 1 bis 12 entspricht.

14. Elektrisches Kochgerät (200), das einen Kochträger (1‴) umfasst, der mit einer Induktionsheizstelle (250) assoziiert ist, **dadurch gekennzeichnet, dass** der Kochträger (1‴) einem der Ansprüche 1 bis 12 entspricht.

15. Verfahren zum Erhalten eines Kochträgers (1') nach einem der Ansprüche 1 bis 12, das die folgenden Schritte umfasst:
- Ausschneiden oder Bereitstellen einer Form, die aus einem kolaminierten Bandstahl hervorgeht, der die Wärmediffusionsschicht (11'), die Schicht aus ferromagnetischem Material (12') und die Metallschutzschicht (13') umfasst, wobei die Form, falls gewünscht, eine Scheibe ist,
- Tiefziehen der Form, um einen Kochträger (1') zu bilden, der die obere Kochfläche (2') auf der Seite der Wärmediffusionsschicht (11') und die untere Kochfläche (3') auf der Seite der Metallschutzschicht (13') umfasst.

## Claims

1. A cooking support (1') which can be heated by induction, having an upper cooking surface (2') and a lower cooking surface (3'), the cooking support (1') including a colaminated structure comprising a thermal diffusion layer (11'), coated if desired, for forming the upper cooking surface (2'), and a layer of ferromagnetic material (12'), **characterized in that** the layer of ferromagnetic material (12') is made of non-stainless steel and **in that** the colaminated structure includes a protective metal layer (13') covering the layer of ferromagnetic material (12') on the side opposite the thermal diffusion layer (11'), and **in that** the protective metal layer (13') is formed by an electrolytic nickel coating.

2. The cooking support (1') according to claim 1, **characterized in that** the layer of ferromagnetic material (12') is made from a grade of carbon steel suitable for forming by deep-drawing at ambient temperature.

3. The cooking support (1') according to claim 2, **characterized in that** the layer of ferromagnetic material (12') is made from a grade of steel including from 0.12 to 0.08% by weight of carbon and from 0.6 to 0.35% by weight of manganese.

4. The cooking support (1') according to any one of claims 1 to 3, **characterized in that** the thickness of the thermal diffusion layer (11') is greater than the thickness of the layer of ferromagnetic material (12').

5. The cooking support (1') according to any one of claims 1 to 4, **characterized in that** the thermal diffusion layer (11') is made of aluminum or an aluminum alloy.

6. The cooking support (1') according to any one of claims 1 to 5, **characterized in that** the protective metal layer (13') has a thickness of between 2 and 30 pm, and preferably between 4 and 15 µm.

7. The cooking support (1') according to any one of claims 1 to 6, **characterized in that** a further protective metal layer (14') covers the layer of ferromagnetic material (12') on the side of the thermal diffusion layer (11'), the other protective metal layer (14') being formed if desired by a further electrolytic nickel coating.

8. The cooking support (1') according to claim 7, **characterized in that** the other protective metal layer (14') has a thickness of between 2 and 30 pm, and preferably between 4 and 15 µm.

9. The cooking support (1') according to any one of claims 1 to 8, **characterized in that** the thermal diffusion layer (11') has a thickness of between 0.5 and 6 mm, and preferably between 1 and 1.5 mm.

10. The cooking support (1') according to any one of claims 1 to 9, **characterized in that** the layer of ferromagnetic material (12') has a thickness of between 0.15 and 1 mm, and preferably between 0.25 and 0.6 mm.

11. The cooking support (1') according to any one of claims 1 to 10, **characterized in that** the thermal diffusion layer (11') bears a coating (10') forming the upper cooking surface (2'), in particular a PTFE coating, or a ceramic coating or an enamel coating.

12. The cooking support (1') according to any one of claims 1 to 11, **characterized in that** it includes a base (4) surrounded by a lateral wall (5) for forming a cooking vessel (7').

13. A culinary article (100) including a cooking support (1") having a gripping element (102), **characterized in that** the cooking support (1") is according to anyone of claims 1 to 12.

14. An electric cooking appliance (200) including a cooking support (1‴) associated with an induction heating element (250), **characterized in that** the cooking support (1‴) is according to any one of claims 1 to 12.

15. A method for obtaining a cooking support (1') according to any one of claims 1 to 12, including the following steps:
- cutting or providing a form from a colaminated strip comprising the thermal diffusion layer (11'), the ferromagnetic material layer (12') and the protective metal layer (13'), the form being a disc if desired,
- deep-drawing the form to form a cooking support (1') including the upper cooking surface (2') on the side of the thermal diffusion layer (11') and the lower heating surface (3') on the side of the protective metal layer (13').
